# EUROPEAN PATENT APPLICATION

(11) **EP 2 975 855 A1**
(43) Date of publication of application: **20.01.2016**
(21) Application number: 14765213.5
(22) Date of filing: 05.03.2014
(51) Int. Cl.: H04Q 9/00, H04M 1/00

(54) **OPERATION TERMINAL CONTROL SYSTEM**

(30) Priority: 13.03.2013 JP 2013050590
(71) Applicant: Panasonic Intellectual Property Management Co., Ltd., Osaka-shi, Osaka 540-6207 (JP)
(72) Inventor: KYOMEN, Koji, Osaka 540-6207 (JP); TSUJIMOTO, Ikuo, Osaka 540-6207 (JP); MAEDA, Kazunari, Osaka 540-6207 (JP); TAKAO, Yoshie, Osaka 540-6207 (JP)
(74) Representative: Appelt, Christian W.
(86) International application number: PCT/JP2014/001208
(87) International publication number: WO 2014/141629

(57) **Abstract**

In a relay terminal that includes a function of a lighting switch that switches a lighting state of a lighting fixture or a function of an outlet that supplies power to a load, when a wireless communication portion receives an operation request requesting for an operation of an operation terminal from a mobile terminal, an operation communication portion transmits an operation signal to the operation terminal via a communication line, and a control portion of the operation terminal controls a controlled apparatus based on the received operation signal.

## Description

### TECHNICAL FIELD

This invention generally relates to operation terminal control systems, and in particular to an operation terminal control system in which an operation terminal configured to control a controlled apparatus and a relay apparatus that includes a function of a lighting switch or an outlet are connected to each other via a communication line.

### BACKGROUND ART

Heretofore, an operation terminal such as a switch unit configured to control, in a house, operations of a household apparatus such as a lighting fixture or an air-conditioning apparatus has been provided on a wall surface or the like in an embedded state. A user can turn on and off of a lighting fixture, perform a temperature setting of an air-conditioning apparatus, or the like, by operating the operation terminal.

Also, in recent years, mobile terminals such as a mobile phone, a smartphone, and a PDA (Personal Digital Assistant) are in widespread use. In this regard, for example, Document 1 (JP 2012-174513A) disclose a configuration in which an operation terminal in a house is provided with an infrared communication function, and a mobile terminal is used as a remote controller for performing remote control on this operation terminal. In the configuration described in Document 1, the operation terminal performs infrared communication with the mobile terminal, and controls operations of the household apparatus by turning on and off a relay inside the operation terminal.

However, in the configuration described in Document 1, although an operation terminal having an infrared communication function can be operated remotely by using a mobile terminal, another operation terminal that does not have an infrared communication function cannot be operated remotely. Also, providing an infrared communication function in each operation terminal would cause an increase in cost.

### SUMMARY OF INVENTION

The present invention has been made in view of the above-described problems, and an object of the present invention is to provide a low cost operation terminal control system in which a plurality of operation terminals can be operated remotely by using a mobile terminal.

An operation terminal control system of a first aspect according to the present invention includes an operation terminal configured to control a first controlled apparatus; and a relay terminal including a function of a lighting switch configured to switch a lighting state of a lighting fixture or a function of an outlet that supplies power to a load. The operation terminal and the relay terminal are connected to each other via a communication line. The relay terminal includes: a first communication portion configured to communicate with the operation terminal via the communication line; and a first wireless communication portion configured to perform wireless communication with a mobile terminal. The first communication portion is configured to, when the first wireless communication portion receives an operation request for requesting an operation of the operation terminal from the mobile terminal, transmit an operation signal according to the operation request to the operation terminal via the communication line. The operation terminal includes: a second communication portion configured to communicate with the relay terminal via the communication line; a first operation portion to be operated by a user; and a control portion configured to control the first controlled apparatus according to an operation on the first operation portion. The control portion is further configured to control the first controlled apparatus based on the operation signal received by the second communication portion.

In an operation terminal control system of a second aspect according to the present invention, realized in combination with the first aspect, the lighting switch that constitutes the relay terminal is configured to collectively switch lighting states of a plurality of the lighting fixtures according to an operation of the user.

In an operation terminal control system of a third aspect according to the present invention, realized in combination with the first aspect, the outlet that constitutes the relay terminal includes a contact member configured to supply or cut off power to the load.

In an operation terminal control system of a fourth aspect according to the present invention, realized in combination with any one of the first to third aspects, the operation terminal control system includes a plurality of the relay terminals provided respectively in a plurality of areas in a house.

In an operation terminal control system of a fifth aspect according to the present invention, realized in combination with any one of the first to fourth aspects, the operation terminal control system includes a plurality of the operation terminals. The first communication portion is configured to, when the first wireless communication portion receives an operation request for requesting operations of two or more of the plurality of the operation terminals from the mobile terminal, transmit the operation signal to the two or more of the plurality of operation terminals.

In an operation terminal control system of a sixth aspect according to the present invention, realized in combination with any one of the first to fifth aspects, the operation terminal control system includes a plurality of the operation terminals. The operation terminal control system further includes an integrated management terminal that includes a second operation portion, a third communication portion, and a first mode setting portion. The second operation portion is configured to be operated by the user. The third communication portion is configured to communicate via the communication line. The first mode setting portion is configured to, according to an operation on the second operation portion, make registration of associating two or more operation terminals, among the plurality of operation terminals, with a selected one of a plurality of operation modes and associating individually operation contents with the two or more operation terminals. The third communication portion is configured to, when any one of the plurality of operation modes is selected, transmit the operation signal for operating the two or more operation terminals associated with the selected operation mode to the two or more operation terminals.

In an operation terminal control system of a seventh aspect according to the present invention, realized in combination with the sixth aspect, the integrated management terminal includes a second wireless communication portion configured to perform wireless communication with the mobile terminal. The third communication portion is configured to transmit, when the second wireless communication portion receives the operation request from the mobile terminal, the operation signal to the two or more operation terminals via the communication line.

In an operation terminal control system of an eighth aspect according to the present invention, realized in combination with the sixth or seventh aspect, the integrated management terminal includes a second mode setting portion. The second mode setting portion is configured to, based on a mode setting signal transmitted from the mobile terminal, make registration of associating two or more operation terminals, among the plurality of the operation terminals, with a selected one of the plurality of operation modes and associating individually operation contents with the two or more operation terminals. The third communication portion is configured to, when any one of the plurality of operation modes is selected, transmit the operation signal for operating the two or more operation terminals associated, by the registration by the first mode setting portion or the second mode setting portion, with the selected operation mode to the two or more operation terminals.

In an operation terminal control system of a ninth aspect according to the present invention, realized in combination with the eighth aspect, the integrated management terminal is configured to prioritize content registered by the first mode setting portion over content registered by the second mode setting portion.

In an operation terminal control system of a tenth aspect according to the present invention, realized in combination with the eighth aspect, the integrated management terminal is configured to prioritize content registered by the second mode setting portion over content registered by the first mode setting portion.

In an operation terminal control system of an eleventh aspect according to the present invention, realized in combination with the eighth aspect, the integrated management terminal is configured to select one of two settings of prioritizing content registered by the first mode setting portion and prioritizing content registered by the second mode setting portion.

In an operation terminal control system of a twelfth aspect according to the present invention, realized in combination with the eleventh aspect, the integrated management terminal is configured to select one of the two settings of prioritizing the content registered by the first mode setting portion and prioritizing the content registered by the second mode setting portion according to an operation of the user on the second operation portion.

In an operation terminal control system of a thirteenth aspect according to the present invention, realized in combination with the eleventh aspect, the integrated management terminal is configured to select one of the two settings of prioritizing the content registered by the first mode setting portion and prioritizing the content registered by the second mode setting portion according to a wireless signal transmitted when the user operates the mobile terminal.

In an operation terminal control system of a fourteenth aspect according to the present invention, realized in combination with any one of the sixth to thirteenth aspects, an apparatus control terminal configured to control an operation of a second controlled apparatus is connected to the communication line. The integrated management terminal is configured to control the second controlled apparatus by communicating with the apparatus control terminal.

In an operation terminal control system of a fifteenth aspect according to the present invention, realized in combination with any one of the first to fourteenth aspects, an apparatus control terminal configured to control an operation of a second controlled apparatus is connected to the communication line. The relay terminal is configured to, when the relay terminal receives a control request for requesting control of the second controlled apparatus from the mobile terminal, control the second controlled apparatus by communicating with the apparatus control terminal.

In an operation terminal control system of a sixteenth aspect according to the present invention, realized in combination with the fifteenth aspect, the apparatus control terminal is configured to control operations of a plurality of the second controlled apparatuses. The relay terminal is configured to, when the relay terminal receives a control request for requesting control of two or more of the plurality of the second controlled apparatuses from the mobile terminal, control the two or more of the plurality of second controlled apparatuses by communicating with the apparatus control terminal.

### BRIEF DESCRIPTION OF DRAWINGS

FIG. 1 is a block diagram illustrating a system configuration of an embodiment;
FIG. 2 is a block diagram illustrating another configuration of a relay terminal of the embodiment;
FIG. 3 is a block diagram illustrating another system configuration of the embodiment;
FIG. 4 is a block diagram illustrating a configuration of an integrated management terminal of the embodiment; and
FIG. 5 is a block diagram illustrating a configuration of an apparatus control terminal of the embodiment.

### DESCRIPTION OF EMBODIMENTS

Hereinafter, an embodiment of the present invention will be described with reference to the drawings.

### Embodiment

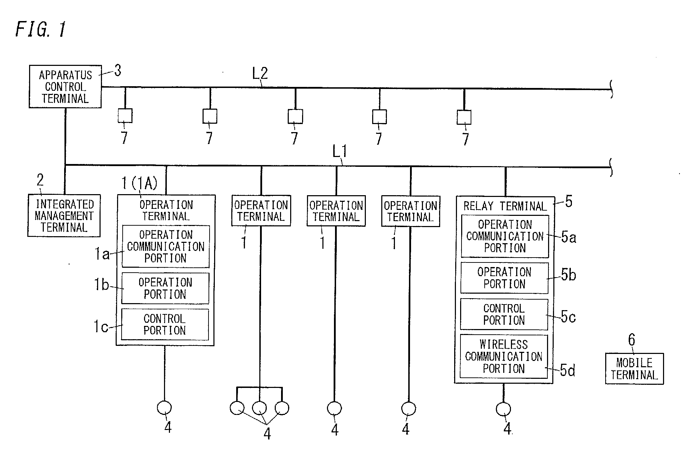

An operation terminal control system of the present embodiment is provided in a house, and a block configuration thereof is shown in FIG. 1.

The operation terminal control system of the embodiment includes a plurality of operation terminals 1, an integrated management terminal 2, an apparatus control terminal 3, and a relay terminal 5. The plurality of operation terminals 1, the integrated management terminal 2, the apparatus control terminal 3, and the relay terminal 5 are connected to a communication line L1, and are configured to be able to communicate to each other. Note that a communication protocol of RS485, for example, is used for communication on the communication line L1.

Furthermore, each of the plurality of operation terminals 1 and the relay terminal 5 is associated with a controlled apparatus 4 (corresponding to a first controlled apparatus of the present invention, and being constituted by a lighting fixture, an air-conditioning apparatus, a floor heating apparatus, or the like, in a house) that serves as the control target of the terminal such that the controlled apparatus 4 can be controlled wirelessly or by wire. Each of the operation terminals 1 and the relay terminal 5 is configured to control operations of one or more of controlled apparatuses 4 that are associated with the terminal.

The operation terminal 1 is constituted by a lighting switch, an air-conditioning controller, a floor heating controller, or the like, which is provided in an embedded state on a wall surface in a house. The operation terminal 1 includes an operation communication portion 1a (second communication portion), an operation portion 1b (first operation portion), and a control portion 1c. The lighting switch includes an individual lighting switch, a collective lighting switch, a touch switch, a timer remote control switch, a standby power cutoff switch, or the like.

The individual lighting switch is configured to individually switch the lighting state of a lighting fixture serving as the controlled apparatus 4 by an operation on the operation portion 1b. The collective lighting switch is configured to collectively switch the lighting states of a plurality of lighting fixtures by an operation on the operation portion 1b. The touch switch includes a small push button switch having a short stroke as the operation portion 1b. The timer remote control switch includes a function of setting time of a timer in the operation portion 1b and is configured to automatically switch the lighting state of a lighting fixture after the set time passes. The standby power cutoff switch is used for the purpose of cutting off the standby power of a controlled apparatus 4.

The operation portion 1b is constituted by a push button, a touch panel, or the like, which are operated by a user to control a controlled apparatus 4. The control portion 1c is configured to control the controlled apparatus 4 according to the operation on the operation portion 1b. For example, the control portion 1c of an operation terminal 1 that controls a lighting fixture serving as the controlled apparatus 4 includes internally a relay that makes conductive or cuts off the power supply path to the lighting fixture, and is configured to turn the lighting fixture on and off by turning the relay on and off according to the operation on the operation portion 1b.

Also, the control portion 1c of an operation terminal 1 that controls an air-conditioning apparatus or a floor heating apparatus serving as the controlled apparatus 4 is configured to control operations of the air-conditioning apparatus or the floor heating apparatus by transmitting control commands for operation and stop and setting a target temperature to the air-conditioning apparatus or the floor heating apparatus according to the operation on the operation portion 1b.

The relay terminal 5 is constituted by a lighting switch, an air-conditioning controller, a floor heating controller, or the like that is installed in an embedded state on a wall surface in a house, for example. The relay terminal 5 includes an operation communication portion 5a (first communication portion), an operation portion 5b, a control portion 5c, and a wireless communication portion 5d (first wireless communication portion). The lighting switch includes an individual lighting switch, a collective lighting switch, a touch switch, a timer remote control switch, a standby power cutoff switch, or the like.

The individual lighting switch is configured to individually switch the lighting state of a lighting fixture serving as the controlled apparatus 4 by an operation on the operation portion 5b. The collective lighting switch is configured to collectively switch the lighting states of a plurality of lighting fixtures according to an operation on the operation portion 5b. The touch switch includes a small push button switch having a small stroke as the operation portion 5b. The timer remote control switch includes a function of setting time of a timer in the operation portion 5b, and is configured to automatically switch the lighting state of a lighting fixture after the set time passes. The standby power cutoff switch is used for the purpose of cutting off standby power of a controlled apparatus 4.

The operation portion 5b is constituted by a push button, a touch panel, or the like, which is operated by a user to control a controlled apparatus 4. The control portion 5c is configured to control the controlled apparatus 4 according to the operation on the operation portion 5b. For example, the control portion 5c of a relay terminal 5 that controls a lighting fixture serving as the controlled apparatus 4 includes internally a relay that makes conductive or cuts off the power supply path to the lighting fixture, and is configured to turn the lighting fixture on and off by turning the relay on and off according to the operation on the operation portion 5b.

Also, the control portion 5c of the relay terminal 5 that controls an air-conditioning apparatus or a floor heating apparatus serving as the controlled apparatus 4 is configured to control operations of the air-conditioning apparatus or the floor heating apparatus by transmitting control commands for operation and stop and setting target temperature to the air-conditioning apparatus or the floor heating apparatus according to the operation on the operation portion 5b.

The wireless communication portion 5d is configured to perform wireless communication with a mobile terminal 6 such as a mobile phone, a smartphone, or PDA based on Bluetooth (registered trademark) or the like.

The mobile terminal 6 is configured to transmit an operation request for requesting an operation of a specific operation terminal 1 with a wireless signal according to an operation of a user. In the relay terminal 5, the control portion 5c of the relay terminal 5 is configured to, when the wireless communication portion 5d receives the operation request from the mobile terminal 6, and if the request destination of the operation request is the relay terminal 5 itself, control the controlled apparatus 4 according to the operation request.

For example, assume a case that the relay terminal 5 is a lighting switch that controls turning on and off of a lighting fixture serving as the controlled apparatus 4, and the mobile terminal 6 transmits an operation request for requesting a turning-on operation of the lighting fixture by the relay terminal 5. In this case, the control portion 5c of the relay terminal 5 performs turning-on control on the lighting fixture.

Furthermore, in a case that if the request destination of the operation request is another operation terminal 1 (operation terminal 1A, for example) that is not the relay terminal 5, the operation communication portion 5a of the relay terminal 5 transmits an operation signal to the operation terminal 1A via the communication line L1. The operation communication portion 5a includes an interface function that performs signal transmission to and reception from the communication line L1, and is configured to generate the operation signal by performing protocol conversion on the operation request, and send out the operation signal to the communication line L1.

In the operation terminal 1A, the operation communication portion 1a is configured to receive the operation signal from the relay terminal 5, and the control portion 1c is configured to control the controlled apparatus 4 according to the received operation signal. For example, assume a case that the operation terminal 1A is a lighting switch that controls turning on and off of the lighting fixture serving as the controlled apparatus 4, and the relay terminal 5 transmits an operation signal for requesting a turning-on operation of the lighting fixture by the operation terminal 1A. In this case, the control portion 1c of the operation terminal 1A performs turning-on control on the lighting fixture.

Accordingly, in the present control system, since the relay terminal 5 is configured to relay an operation request from the mobile terminal 6 to another operation terminal 1, the plurality of operation terminals 1 can be operated remotely using the mobile terminal 6. Also, it is not necessary that all the operation terminals 1 include the respective wireless communication portions, but it is sufficient that at least one relay terminal 5 includes the wireless communication portion 5d. Accordingly, system construction costs can be suppressed. That is, a low-cost operation terminal control system in which a plurality of the operation terminals 1 can be operated remotely using the mobile terminal 6 can be constructed.

Note that the relay terminal 5 may be any of the individual lighting switch, the collective lighting switch, the touch switch, the timer remote control switch, and the standby power cutoff switch described above. In particular, it is preferable that the relay terminal 5 is the individual lighting switch or the collective lighting switch described above.

Also, a relay terminal 8 that includes a function of an outlet that supplies electric power to a load (not shown) may be used as the relay terminal.

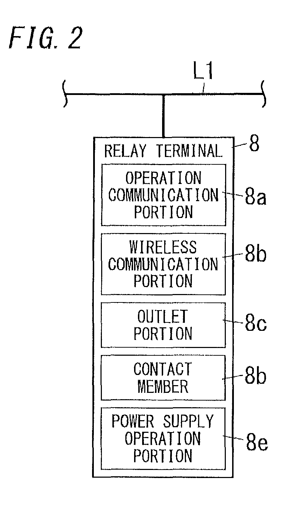

The relay terminal 8 including the function of an outlet includes an operation communication portion 8a, a wireless communication portion 8b, an outlet portion 8c, a contact member 8d, and a power supply operation portion 8e, as shown in FIG. 2.

The outlet portion 8c is an outlet to which a power supply plug of a load (not shown) is connected, and is configured to supply commercial electric power to the load. The contact member 8d is disposed in a power supply path of the outlet portion 8c, and makes conductive or cuts off the electric path to the outlet portion 8c by an operation of a user on the power supply operation portion 8e. Accordingly, the user can cut off the standby power of the load by operating the power supply operation portion 8e when the load is in a standby state.

The wireless communication portion 8b is configured to perform wireless communication with the mobile terminal 6 based on Bluetooth (registered trademark) or the like. The operation communication portion 8a includes an interface function that performs signal transmission to and reception from the communication line L1, and is configured to generate an operation signal by performing protocol conversion on an operation request from the mobile terminal 6, and send out the operation signal to the communication line L1. Accordingly, the relay terminal 8 can relay an operation request from the mobile terminal 6 to another operation terminal 1, similarly to the relay terminal 5.

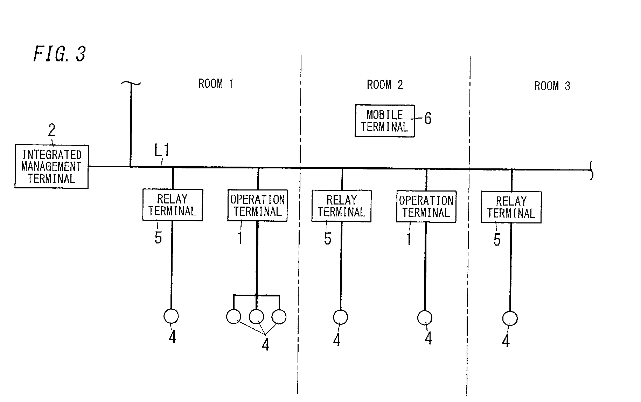

Also, a plurality of the relay terminals 5 may be provided respectively in a plurality of rooms (areas) in a house, as shown in FIG. 3. Therefore, a user can remotely operate any of the operation terminals 1 and the relay terminals 5 that are in the house by operating the mobile terminal 6 that the user carries regardless of the room the user is in.

Also, the mobile terminal 6 can transmit an operation request requesting for operations of two or more of the operation terminals 1. The operation communication portion 5a of the relay terminal 5 is configured to, when the relay terminal 5 receives such operation request, remotely operate the two or more operation terminals 1 simultaneously by transmitting an operation signal to the two or more operation terminals 1 via the communication line L1.

Furthermore, the mobile terminal 6 is configured to make registration of, in the mobile terminal 6, associating operation terminals 1 with a selected one of a plurality of operation modes such as a going out mode and a coming home mode, and associating individually operation contents with the operation terminals 1. The mobile terminal 6 is configured to, when any one of the modes is selected by an operation of the user, wirelessly transmit to the relay terminal 5 an operation request for requesting operations of the operation terminals 1 associated with the selected operation mode.

The operation communication portion 5a of the relay terminal 5 is configured to transmit, via the communication line L1, an operation signal in which the operation mode is set to the operation terminals 1 indicated by the operation request, and thereby the operation terminals 1 are operated remotely. In this case, it is sufficient that the user presets the operation contents of the respective operation terminals 1 for each of the operation modes in the mobile terminal 6, and user-friendliness is improved. For example, in the going out mode, all the lighting fixtures in the house are turned off, all the air-conditioning apparatuses and all the floor heating apparatuses are stopped, the fixtures and the apparatuses serving as the controlled apparatuses 4. In the coming home mode, the lighting fixture in a living room is lit, and the air-conditioning apparatus and the floor heating apparatus in the living room are caused to operate.

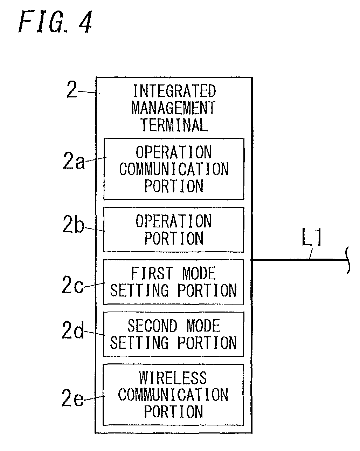

As shown in FIG. 4, the integrated management terminal 2 includes an operation communication portion 2a (third communication portion), an operation portion 2b (second operation portion), a first mode setting portion 2c, a second mode setting portion 2d, and a wireless communication portion 2e (second wireless communication portion).

The wireless communication portion 2e is configured to perform wireless communication with the mobile terminal 6 based on Bluetooth (registered trademark) or the like. The mobile terminal 6 is configured to wirelessly transmit an operation request for requesting an operation of a specific operation terminal 1 (operation terminal 1A, for example) according to an operation of the user.

In the integrated management terminal 2, the wireless communication portion 2e is configured to receive an operation request from the mobile terminal 6, and the operation communication portion 2a is configured to transmit an operation signal to the operation terminal 1A via the communication line L1. The operation communication portion 2a includes an interface function that performs signal transmission to and reception from the communication line L1, and is configured to generate the operation signal by performing protocol conversion on the operation request, and send out the operation signal to the communication line L1.

In the operation terminal 1A, the operation communication portion 1a is configured to receive the operation signal from the integrated management terminal 2, and the control portion 1c is configured to control the controlled apparatus 4 according to the operation signal.

Also, the operation portion 2b is constituted by an input means such as a touch panel, and is operated by a user. The operation communication portion 2a is configured to transmit an operation signal to the operation terminal 1 also according to an operation of the user on the operation portion 2b, and thereby the operation terminal 1 is operated remotely.

Also, the first mode setting portion 2c is configured to make registration of, according to an operation by the user on the operation portion 2b, associating operation terminals 1 with a selected one of the plurality of operation modes such as the going out mode and the coming home mode and associating individually operation contents with the operation terminals 1. That is, the first mode setting portion 2c is configured to make registration of the operation modes according to the operation on the operation portion 2b. In other words, the first mode setting portion 2c is configured to make registration of associating two or more operation terminals 1, among the plurality of operation terminals 1, with a selected one of the plurality of operation modes and associating individually operation contents with the operation terminals 1.

The operation communication portion 2a is configured to, when any one of the operation modes is selected by an operation of the user on the operation portion 2b, transmit an operation signal to the two or more operation terminals 1 associated with the selected operation mode, and thereby the two or more operation terminals 1 are operated remotely. In this case, it is sufficient that the user presets operation contents of the respective two or more operation terminals 1 for each of the operation modes in the integrated management terminal 2, and user-friendliness is improved.

Furthermore, the second mode setting portion 2d is configured to make registration of associating operation terminals 1 with a selected one of the plurality of operation modes and associating individually operation contents with the operation terminals based on a mode setting signal transmitted from the mobile terminal 6. That is, the second mode setting portion 2d is configured to make registration of operation modes according to operations on the mobile terminal 6. In other words, the second mode setting portion 2d is configured to make registration of associating two or more operation terminals 1, among the plurality of operation terminals 1, with a selected one of the plurality of operation modes and associating individually operation contents with the two or more operation terminals.

The integrated management terminal 2 may be configured to prioritize the content registered by the first mode setting portion 2c using the operation portion 2b over the content registered by the second mode setting portion 2d using the mobile terminal 6. In this case, if the content registered by the first mode setting portion 2c is different from the content registered by the second mode setting portion 2d for a certain operation mode, the integrated management terminal 2 executes the content registered by the first mode setting portion 2c. That is, the integrated management terminal 2 is configured to select the content registered by the first mode setting portion 2c.

Alternatively, the integrated management terminal 2 may be configured to prioritize the content registered by the second mode setting portion 2d using the mobile terminal 6 over the content registered by the first mode setting portion 2c using the operation portion 2b. In this case, if the content registered by the first mode setting portion 2c is different from the content registered by the second mode setting portion 2d for a certain operation mode, the integrated management terminal 2 executes the content registered by the second mode setting portion 2d. That is, the integrated management terminal 2 is configured to select the content registered by the second mode setting portion 2d.

Also, the integrated management terminal 2 may include a function that selects one of two settings of prioritizing content registered by the first mode setting portion 2c and prioritizing content registered by the second mode setting portion 2d. This priority setting is performed by the operation of the user on the operation portion 2b. Also, prioritization of the first mode setting portion 2c or the second mode setting portion 2d is set by the user operating the mobile terminal 6 and the operation content being transmitted to the integrated management terminal 2 by a wireless signal.

Furthermore, the apparatus control terminal 3 is connected to the communication line L1. The apparatus control terminal 3 is configured to be able to communicate with a plurality of controlled apparatuses 7 (corresponding to second controlled apparatuses of the present invention, and being constituted by an elevator control device, a gas valve drive unit, an intercom slave, and the like) via a communication line L2.

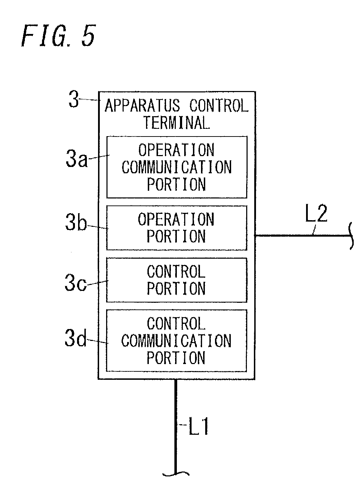

The apparatus control terminal 3 includes an operation communication portion 3a, an operation portion 3b, a control portion 3c, and a control communication portion 3d, as shown in FIG. 5.

The operation communication portion 3a includes an interface function that performs transmission and reception of signals to and from the communication line L1.

The operation portion 3b is constituted by a touch panel, and is configured to receive operation of a user on the touch panel, and display image information on the touch panel.

The control portion 3c includes a function that controls operations of an elevator control device, a gas valve drive unit, and the like, which serve as the controlled apparatuses 7, and a function as an intercom master that transmits and receives voice information and image information to and from an intercom slave serving as a controlled apparatus 7.

The control communication portion 3d includes an interface function that performs transmission and reception of signals to and from the communication line L2. Note that the communication protocol used for the communication on the communication line L2 and the communication protocol used for the communication on the communication line L1 are different from each other.

The control portion 3c is configured to generate a control command for controlling operations of a controlled apparatus 7 by an operation of a user on the operation portion 3b, and the control communication portion 3d is configured to transmit the control command to the controlled apparatus 7 that is the control target. The controlled apparatus 7 is configured to operate based on the received control command. Also, the control portion 3c is configured to, when operating as an intercom master, transmit and receive a control command that includes voice information and image information to and from an intercom slave serving as the controlled apparatus 7.

Also, the integrated management terminal 2 is configured to control a controlled apparatus 7 by the operation communication portion 2a communicating with the apparatus control terminal 3 according to an operation on the operation portion 2b. Specifically, the operation communication portion 2a of the integrated management terminal 2 is configured to transmit a control instruction in which a specific controlled apparatus 7 is designated as the control target to the apparatus control terminal 3. In the apparatus control terminal 3, the control communication portion 3d is configured to, when the operation communication portion 3a receives the control instruction, transmit a control command generated by the control portion 3c to the controlled apparatus 7 which is the control target.

Also, the relay terminal 5 is configured to, upon receiving a control request for requesting control of a controlled apparatus 7 from the mobile terminal 6, control the controlled apparatus 7 by communicating with the apparatus control terminal 3. Specifically, the operation communication portion 5a is configured to, when the relay terminal 5 receives a control request in which a specific controlled apparatus 7 is designated as the control target from the mobile terminal 6, transmit a control instruction to the apparatus control terminal 3. In the apparatus control terminal 3, the control communication portion 3d is configured to, when the operation communication portion 3a receives the control instruction, transmit a control command generated by the control portion 3c to the controlled apparatus 7 which is the control target.

Also, the mobile terminal 6 is configured to make registration of, in the mobile terminal 6 itself, associating controlled apparatuses 7 with a selected one of the plurality of operation modes such as the going out mode and the coming home mode and associating individually control contents with the controlled apparatuses 7. The mobile terminal 6 is configured to, when any one of the operation modes is selected by an operation of the user, wirelessly transmit, to the relay terminal 5, an operation request for requesting operations of the controlled apparatuses 7 associated the selected operation mode.

The operation communication portion 5a of the relay terminal 5 is configured to transmit a control instruction in which the operation mode is set to the apparatus control terminal 3 via the communication line L1, and thereby the controlled apparatuses 7 are controlled remotely. In this case, it is sufficient that the user presets the control content of the respective controlled apparatuses 7 for each of the operation modes in the mobile terminal 6, and user-friendliness is improved.

The operation terminal control system of the present embodiment includes the operation terminal 1 and the relay terminal (5, 8), and the operation terminal 1 and the relay terminal (5, 8) are connected to each other via the communication line L1. The operation terminal 1 is configured to control the controlled apparatus 4 (first controlled apparatus). The relay terminal (5, 8) includes a lighting switch configured to switch the lighting state of a lighting fixture (controlled apparatus 4) or an outlet portion 8c (outlet function) configured to supply power to a load. Also, the relay terminal (5, 8) includes the operation communication portion (5a, 8a) (first communication portion) configured to communicate with the operation terminal 1 via the communication line L1, and the wireless communication portion (5d, 8b) (first wireless communication portion) configured to perform wireless communication with the mobile terminal 6. The operation communication portion (5a, 8a) is configured to, when the wireless communication portion (5d, 8b) receives an operation request for requesting the operation of the operation terminal 1 from the mobile terminal 6, transmit an operation signal according to the operation request to the operation terminal 1 via the communication line L1. The operation terminal 1 includes the operation communication portion 1a (second communication portion) configured to communicate with the relay terminal (5, 8) via the communication line L1, the operation portion 1b (first operation portion) configured to be operated by a user, and the control portion 1c configured to control the controlled apparatus 4 according to the operation on the operation portion 1b. The control portion 1c is configured to control the controlled apparatus 4 based on the operation signal received by the operation communication portion 1a.

Also, as with the operation terminal control system of the present embodiment, it is preferable that the lighting switch that constitutes the relay terminal 5 is configured to collectively switch the lighting states of a plurality of lighting fixtures (controlled apparatus 4) according to the operation of the user.

Also, as with the operation terminal control system of the present embodiment, it is preferable that the outlet portion 8c that constitutes the relay terminal 8 includes the contact member 8d configured to supply or cut off power to a load.

Also, as with the operation terminal control system of the present embodiment, it is preferable that a plurality of the relay terminals 5 are provided respectively in a plurality of areas in a house.

Also, as with the operation terminal control system of the present embodiment, it is preferable that a plurality of the operation terminals 1 are provided. In this case, the operation communication portion (5a, 8a) is configured to, when the wireless communication portion (5d, 8b) receives an operation request for requesting operations of two or more of the plurality of operation terminals 1 from the mobile terminal 6, transmit an operation signal to the two or more of the plurality of operation terminals 1.

Also, as with the operation terminal control system of the present embodiment, it is preferable that a plurality of the operation terminals 1 are provided. In this case, the operation terminal control system includes the integrated management terminal 2 that includes the operation portion 2b (second operation portion), the operation communication portion 2a (third communication portion), and the first mode setting portion 2c. The operation portion 2b is configured to be operated by a user. The operation communication portion 2a is configured to communicate via the communication line L1. The first mode setting portion 2c is configured to, according to an operation on the operation portion 2b, make registration of associating two or more operation terminals 1, among the plurality of operation terminals 1, with a selected one of a plurality of the operation modes and associating individually operation contents with the two or more operation terminals 1. The operation communication portion 2a is configured to, when any one of the plurality of operation modes is selected, transmit an operation signal for operating the two or more operation terminals 1 associated with the selected operation mode to the two or more operation terminals 1.

Also, as with the operation terminal control system of the present embodiment, it is preferable that the integrated management terminal 2 includes the wireless communication portion 2e (second wireless communication portion) configured to perform wireless communication with the mobile terminal 6. In this case, the operation communication portion 2a is configured to, when the wireless communication portion 2e receives an operation request from the mobile terminal 6, transmit an operation signal to the two or more operation terminals 1 via the communication line L1.

Also, as with the operation terminal control system of the present embodiment, it is preferable that the integrated management terminal 2 includes the second mode setting portion 2d. In this case, the second mode setting portion 2d is configured to, based on the mode setting signal transmitted from the mobile terminal 6, make registration of associating two or more operation terminals 1, among the plurality of operation terminals 1, with a selected one of the plurality of operation modes and associating individually operation contents with the two or more operation terminals 1. The operation communication portion 2a is configured to, when any one of the plurality of operation modes is selected, transmit an operation signal for operating the two or more operation terminals 1 associated, by the registration by the first mode setting portion 2c or the second mode setting portion 2d, with the selected operation mode to the two or more operation terminals 1.

Also, as with the operation terminal control system of the present embodiment, it is preferable that the integrated management terminal 2 is configured to prioritize content registered by the first mode setting portion 2c over content registered by the second mode setting portion 2d.

Also, as with the operation terminal control system of the present embodiment, it is preferable that the integrated management terminal 2 is configured to prioritize content registered by the second mode setting portion 2d over content registered by the first mode setting portion 2c.

Also, as with the operation terminal control system of the present embodiment, it is preferable that the integrated management terminal 2 is configured to select one of two settings of prioritizing content registered by the first mode setting portion 2c and prioritizing content registered by the second mode setting portion 2d.

Also, as with the operation terminal control system of the present embodiment, it is preferable that the integrated management terminal 2 is configured to select one of the two settings of prioritizing the content registered by the first mode setting portion 2c and prioritizing the content registered by the second mode setting portion 2d according to an operation of the user on the second operation portion 2b.

Also, as with the operation terminal control system of the present embodiment, it is preferable that integrated management terminal 2 is configured to select one of the two settings of prioritizing the content registered by the first mode setting portion 2c and prioritizing the content registered by the second mode setting portion 2d according to a wireless signal transmitted when the user operates the mobile terminal 6.

Also, as with the operation terminal control system of the present embodiment, it is preferable that the apparatus control terminal 3 configured to control an operation of the controlled apparatus 7 (second controlled apparatus) is connected to the communication line L1. In this case, the integrated management terminal 2 is configured to control the controlled apparatus 7 by communicating with the apparatus control terminal 3.

Also, as with the operation terminal control system of the present embodiment, it is preferable that the apparatus control terminal 3 configured to control an operation of the controlled apparatus 7 (second controlled apparatus) is connected to the communication line L1. In this case, the relay terminal (5, 8) is configured to, when the relay terminal (5, 8) receives a control request for requesting control of the controlled apparatus 7 from the mobile terminal 6, control the controlled apparatus 7 by communicating with the apparatus control terminal 3.

Also, as with the operation terminal control system of the present embodiment, it is preferable that the apparatus control terminal 3 is configured to control operations of a plurality of the controlled apparatuses 7. In this case, the relay terminal (5, 8) is configured to, when the relay terminal (5, 8) receives a control request for requesting control of two or more of the plurality of controlled apparatuses 7 from the mobile terminal 6, control the two or more of the plurality of controlled apparatuses 7 by communicating with the apparatus control terminal 3.

## Claims

1. An operation terminal control system comprising:
an operation terminal configured to control a first controlled apparatus; and
a relay terminal including a function of a lighting switch configured to switch a lighting state of a lighting fixture or a function of an outlet that supplies power to a load,
the operation terminal and the relay terminal being connected to each other via a communication line,
the relay terminal comprising:
a first communication portion configured to communicate with the operation terminal via the communication line; and
a first wireless communication portion configured to perform wireless communication with a mobile terminal,
the first communication portion being configured to, when the first wireless communication portion receives an operation request for requesting an operation of the operation terminal from the mobile terminal, transmit an operation signal according to the operation request to the operation terminal via the communication line,
the operation terminal comprising:
a second communication portion configured to communicate with the relay terminal via the communication line;
a first operation portion to be operated by a user; and
a control portion configured to control the first controlled apparatus according to an operation on the first operation portion,
the control portion being further configured to control the first controlled apparatus based on the operation signal received by the second communication portion.

2. The operation terminal control system according to claim 1, wherein the lighting switch that constitutes the relay terminal is configured to collectively switch lighting states of a plurality of the lighting fixtures according to an operation of the user.

3. The operation terminal control system according to claim 1, wherein the outlet that constitutes the relay terminal comprises a contact member configured to supply or cut off power to the load.

4. The operation terminal control system according to any one of claims 1 to 3, comprising a plurality of the relay terminals provided respectively in a plurality of areas in a house.

5. The operation terminal control system according to any one of claims 1 to 4, comprising a plurality of the operation terminals,
wherein the first communication portion is configured to, when the first wireless communication portion receives an operation request for requesting operations of two or more of the plurality of the operation terminals from the mobile terminal, transmit the operation signal to the two or more of the plurality of operation terminals.

6. The operation terminal control system according to any one of claims 1 to 5, comprising:
a plurality of the operation terminals; and
an integrated management terminal comprising:
a second operation portion to be operated by the user;
a third communication portion configured to communicate via the communication line; and
a first mode setting portion configured to, according to an operation on the second operation portion, make registration of associating two or more operation terminals, among the plurality of operation terminals, with a selected one of a plurality of operation modes and associating individually operation contents with the two or more operation terminals,
wherein the third communication portion is configured to, when any one of the plurality of operation modes is selected, transmit the operation signal for operating the two or more operation terminals associated with the selected operation mode to the two or more operation terminals.

7. The operation terminal control system according to claim 6,
wherein the integrated management terminal comprises a second wireless communication portion configured to perform wireless communication with the mobile terminal, and
wherein the third communication portion is configured to transmit, when the second wireless communication portion receives the operation request from the mobile terminal, the operation signal to the two or more operation terminals via the communication line.

8. The operation terminal control system according to claim 6 or 7,
wherein the integrated management terminal comprises a second mode setting portion configured to, based on a mode setting signal transmitted from the mobile terminal, make registration of associating two or more operation terminals, among the plurality of the operation terminals, with a selected one of the plurality of operation modes and associating individually operation contents with the two or more operation terminals, and
wherein the third communication portion is configured to, when any one of the plurality of operation modes is selected, transmit the operation signal for operating the two or more operation terminals associated, by the registration by the first mode setting portion or the second mode setting portion, with the selected operation mode to the two or more operation terminals.

9. The operation terminal control system according to claim 8, wherein the integrated management terminal is configured to prioritize content registered by the first mode setting portion over content registered by the second mode setting portion.

10. The operation terminal control system according to claim 8, wherein the integrated management terminal is configured to prioritize content registered by the second mode setting portion over content registered by the first mode setting portion.

11. The operation terminal control system according to claim 8, wherein the integrated management terminal is configured to select one of two settings of prioritizing content registered by the first mode setting portion and prioritizing content registered by the second mode setting portion.

12. The operation terminal control system according to claim 11, wherein the integrated management terminal is configured to select one of the two settings of prioritizing the content registered by the first mode setting portion and prioritizing the content registered by the second mode setting portion according to an operation of the user on the second operation portion.

13. The operation terminal control system according to claim 11, wherein the integrated management terminal is configured to select one of the two settings of prioritizing the content registered by the first mode setting portion and prioritizing the content registered by the second mode setting portion according to a wireless signal transmitted when the user operates the mobile terminal.

14. The operation terminal control system according to any one of claims 6 to 13,
wherein an apparatus control terminal configured to control an operation of a second controlled apparatus is connected to the communication line, and
wherein the integrated management terminal is configured to control the second controlled apparatus by communicating with the apparatus control terminal.

15. The operation terminal control system according to any one of claims 1 to 14,
wherein an apparatus control terminal configured to control an operation of a second controlled apparatus is connected to the communication line, and
wherein the relay terminal is configured to, when the relay terminal receives a control request for requesting control of the second controlled apparatus from the mobile terminal, control the second controlled apparatus by communicating with the apparatus control terminal.

16. The operation terminal control system according to claim 15,
wherein the apparatus control terminal is configured to control operations of a plurality of the second controlled apparatuses, and
wherein the relay terminal is configured to, when the relay terminal receives a control request for requesting control of two or more of the plurality of the second controlled apparatuses from the mobile terminal, control the two or more of the plurality of second controlled apparatuses by communicating with the apparatus control terminal.
